Europäisches Patentamt

European Patent Office

Office européen des brevets

(11) Numéro de publication: **0 259 289**
**A2**

## (12) DEMANDE DE BREVET EUROPEEN

(21) Numéro de dépôt: 87870116.8

(22) Date de dépôt: 19.08.87

(51) Int. Cl.⁴: **A 01 M 17/00**
A 01 M 25/00

(30) Priorité: 21.08.86 BE 1011538

(43) Date de publication de la demande:
09.03.88 Bulletin 88/10

(84) Etats contractants désignés:
CH DE FR GB IT LI NL

(71) Demandeur: **Danheux, Jean**
**Rue de Bolinne, 24**
**B-5051 Eghezée (BE)**

(72) Inventeur: **Danheux, Jean**
**Rue de Bolinne, 24**
**B-5051 Eghezée (BE)**

(54) **Outil de jardinage destiné à la pose des toxiques dans les galeries de rongeurs.**

(57) Sonde composée d'une tige coulissant dans une gaine munie d'un réservoir; la variation de position de la tige dans la gaine signale que la pointe de la sonde a atteint une galerie de rongeur. Le retrait de la tige permet au produit contenu dans le réservoir de s'écouler dans la galerie.

fig 1

EP 0 259 289 A2

Bundesdruckerei Berlin

## Description

### Outil de jardinage destiné à la pose des toxiques dans les galeries de rongeurs.

L'invention concerne un outil de jardinage, constitué d'une tige coulissant dans une gaine; l'ensemble tige-gaine forme une sonde.

Actuellement, la pose des toxiques dans les galeries de rongeurs -spécialement celles des taupes - se fait manuellement en s'aidant d'outils de jardinage non spécifiques tels que: bêche, truelle ou bout de tuyau. Toutes ces méthodes imposent aux galeries une modification apparente, ce qui met les rongeurs en méfiance. Il existe cependant un procédé ancien qui consiste à sonder le sol avec une tige jusqu'à la découverte d'une galerie et profiter de la cheminée laissée dans le sol par le retrait de la sonde pour introduire des toxiques dans la galerie. Ce procédé, pour être bien conduit, demande beaucoup de dextérité et une structure du sol particulière; de plus, rien ne permet de s'assurer que les toxiques ont bien abouti dans la galerie: ils restent très souvent bloqués dans la cheminée.

L'invention, telle qu'elle est caractérisée dans les revendications, a pour but de supprimer ces inconvénients par la création d'un outil constitué d'une tige coulissant dans un tube - l'ensemble formant une sonde destinée à être enfoncée dans le sol à la recherche de galeries -. La tige a une course contrôlée dans le tube, et la variation de sa position signale l'introduction de la pointe de la sonde dans une galerie; la tige retirée permet d'introduire les toxiques par le tube formant gaine.

L'invention se distingue par le fait que la détection de la galerie est signalée mécaniquement et ne dépend donc pas de la subjectivité de l'utilisateur. La pose des toxiques se faisant par le tube formant gaine, on est assuré qu'ils aboutissent bien dans la galerie: dont l'aspect ne subit pas de changement notable. Le temps consacré au travail est fortement réduit par rapport aux procédés traditionnels.

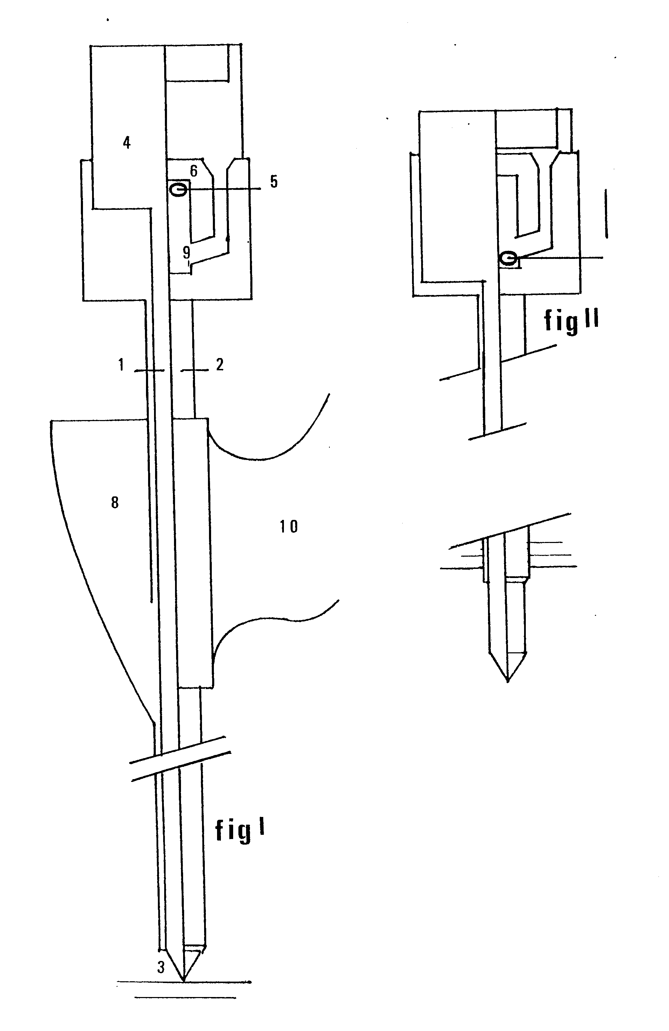

L'invention est exposée ci-après plus en détail à l'aide de dessins représentant seulement un mode d'exécution. La figure 1. représente l'outil en demi-coupe, la figure 2. la variation de position des pièces entre elles. L'outil est composé de deux parties pouvant être assemblées ou séparées. La première est composée d'un tube cylindrique (2), d'une poignée (10), d'un réservoir (8) communiquant avec l'intérieur du tube et destiné à contenir une dose de produit. L'extrémité supérieure du tube est encochée (9) pour recevoir les ergots de la tige. La deuxième partie est constituée d'une tige (1) d'un diamètre légèrement inférieur à celui interne du tube; l'extrémité inférieure de la tige étant formée en pointe (3) (pour favoriser la pénétration dans le sol) alors que l'autre extrémité est solidaire d'une masse (4) (destinée à donner du poids). Un ou deux ergots (5) sont prévus à une distance telle que l'appareil une fois assemblé, la pointe ne dépasse du tube que par sa partie conique, les ergots étant contre la butée haute (6).

Fonctionnement: L'appareil monté, les ergots étant dans leurs coulisses (9) et le réservoir (8) garni du produit à distribuer, est enforcé verticalement dans le sol aux endroits où sont présumés exister des galeries.

Aussi longtemps que la pointe de l'outil rencontre la résistance du sol, la tige se maintient en position haute dans le tube (figure 1.). Par contre, dès qu'une galerie est rencontrée, la résistance du sol disparaît, et la tige s'affaisse vers le bas -ce déplacement visible par l'opérateur lui signale la présence de la galerie -.

Il suffit dès lors de retirer la tige du tube pour permettre au produit de s'écouler dans la galerie. L'appareil une fois retiré, une légère pression latérale du pied sur le sol permet de refermer la cheminée laissée par l'outil; évitant ainsi tout courant d'air dans la galerie.

## Revendications

1. Outil de jardinage, destiné à la pose de produits toxiques dans les galeries de rongeurs - constitué d'une tige coulissant dans un tube; l'ensemble tige-gaine formant une sonde -.

2. Outil selon la revendication 1, dans lequel la course de la sonde est contrôlée et visualisée.

3. Outil selon les revendications 1 et 2 dans lequel le tube constitue un guide pour l'écoulement des produits la tige enlevée ou soulevée.

4. Outil commme ci-dessus où un réservoir contenant des produits est solidaire du tube.

5. Outil comme ci-dessus où le poids de la tige est déterminé par une masse qui lui est solidaire.

6. Outil comme ci-dessus où la masse peut être remplacée par un ressort.

7. Ensemble des moyens décrits ci-dessus, utilisés seuls ou conjointement pour aboutir à l'invention.

0259289

fig I

fig II